# EUROPEAN PATENT APPLICATION

(11) **EP 4 539 135 A1**
(43) Date of publication of application: **16.04.2025**
(21) Application number: 24205846.9
(22) Date of filing: 10.10.2024
(51) Int. Cl.: H01M 4/04, H01M 4/133, H01M 4/134, H01M 4/139, H01M 4/62, H01M 4/66, H01M 10/052, H01M 4/02

(54) **ELECTRODE MATERIAL FOR A SECONDARY BATTERY AND METHOD OF MANUFACTURING THE SAME**

(30) Priority: 11.10.2023 KR 20230134983
(71) Applicant: IRM Co., Ltd., Ansan-si, Gyeonggi-do (KR)
(72) Inventor: CHOI, Yu Kyoung, Yongm-si, Gyeonggi-do (KR)
(74) Representative: M. Zardi & Co S.A.

(57) **Abstract**

An electrode for a secondary battery and a method for manufacturing the same are disclosed, which reduces lithium side reactions, has a simple process, and can reduce cracks caused by external impact. The electrode material for a secondary battery according to an exemplary embodiment of the present invention comprises a base film with a plurality of through holes, a binder and a current collector. The binder includes active material particles dispersed therein and is fixed to the through holes. The current collector is attached to the base film.

## Description

### CROSS REFERENCE TO RELATED APPLICATION

This application claims priority from and the benefit of Korean Patent Applications No. 10-2023-0134983, filed on October 11, 2023, which is hereby incorporated by reference for all purposes as if fully set forth herein.

### BACKGROUND OF THE INVENTION

### FIELD OF THE INVENTION

The present invention relates to an electrode material for a secondary battery and a method of manufacturing the electrode.

### DISCUSSION OF THE BACKGROUND

Currently, as the information age becomes more advanced, mobile electronic devices carried by individuals are widely used. These mobile electronic devices inevitably require batteries to operate.

In the past, primary batteries such as manganese batteries and alkaline batteries were mainly used, which were used once and discarded when discharged. However, recently, secondary batteries, which can be recharged after discharge and used repeatedly, are being widely used instead of primary batteries, which are disadvantageous in terms of environmental pollution and cost of waste batteries.

These secondary batteries are generally composed of anode materials, cathode materials, electrolytes, and separators. Among these, anode and cathode materials are the most important materials that determine the capacity, lifespan, and charging speed of the battery. The cathode material is a lithium ion source and determines the capacity and average voltage of the battery, and the cathode material determines the charging speed and lifespan.

In order to manufacture electrode materials such as positive or negative electrode materials, in Korean Patent Publication No. 10-2006-0025230, "DRY PARTICLE BASED ELECTRO-CHEMICAL DEVICE AND METHODS OF MAKING SAME", a dry active material and a dry binder are mixed at room temperature to form a matrix of the dry active material, and a jet mill is used to perform dry fiberization including fluororesin such as PTFE and PVDF through a high-temperature process to develop a dry active material sheet. However, although PTFE has an advantage in fiberization for forming an active material sheet, lithium resistance increases due to a side reaction during lithium charge and discharge. To solve this problem, Korean Patent Publication No. 10-2016-0145043, "DRY ENERGY STORAGE DEVICE ELECTRODE AND METHODS OF MAKING THE SAME" also used a composite binder including PTFE and PVDF or a copolymer, and Korean Patent Publication No. 10-2022-0100240, "Dry binder and Electrode for lithium secondary battery including same and Method for manufacturing the same" used a mixture of PTFE and CMC or PAA to minimize the resistance of lithium. In order to minimize the side reaction of such active materials, PVDF, CMC, PAA, etc. are added to PTFE to suppress the side reaction, but on the other hand, the fiberization structure is not satisfactory. In other words, the compositional force for shear force is strong, but as a result, a side reaction (increased resistance) of lithium occurs, resulting in degradation of the battery.

### SUMMARY OF THE INVENTION

Therefore, the present invention provides an electrode material for a secondary battery and a method for manufacturing the electrode material, which can reduce side reactions of lithium, have a simple manufacturing process, and reduce cracks caused by external impact.

An electrode material for a secondary battery according to an exemplary embodiment of the present invention comprises a base film with a plurality of through holes, a binder and a current collector. The binder includes active material particles dispersed therein and is fixed to the through holes. The current collector is attached to the base film.

For example, the active material particles may be negative electrode active material particles including at least one of carbon, silicon, tin, antimony, and graphene.

In this case, the current collector may be copper (Cu) foil.

For example, the active material particles may be positive electrode active material particles composed of aluminum (Al), nickel (Ni), titanium (Ti), tungsten (W), iron (Fe), chromium (Cr), alloys thereof, and combinations thereof.

In this case, the current collector may be aluminum (Al) foil.

For example, the binder may comprise at least one of PVDF (Polyvinylidene fluoride), elastomer, SBR (styrene butadiene rubber), CMC (carboxy methylcellulose), NBR (nitrile butadiene rubber), butadiene, and PAA (polyacrylic acid).

For example, the base film with a plurality of through holes may comprise at least one of PVDF (Polyvinylidene fluoride), PTFE (Polytetrafluoroethylene), PP (polypropylene), PE (polyethylene), PVC (Polyvinyl chloride), nylon, and cotton.

For example, the base film with a plurality of through holes may comprise either PVDF (Polyvinylidene fluoride) or PTFE (Polytetrafluoroethylene), and the base film with a plurality of through holes is treated with a sodium naphthalene solution.

For example, the base film with a plurality of through holes may comprise PVDF (Polyvinylidene fluoride), and the PVDF has a molecular weight of 600,000 or less.

For example, a diameter of the through holes of the base film may be in the range of 50 *µ*m to 800 *µ*m.

For example, a thickness ratio of the binder and the base film with a plurality of through holes may be in the range of 1:1 to 2:1.

For example, the binder may further include conductive particles dispersed therein.

For example, the conductive particles may comprise include at least one of carbon black, acetylene black, VGCF (Vapor grown carbon fiber), CNT, and graphene.

For example, the current collector may be attached to the base film with a plurality of through holes through an adhesive.

For example, the adhesive may be a mixture of a polymer resin and a conductor or a conductive polymer resin.

For example, the polymer resin may comprise one of SBR (styrene butadiene rubber), CMC (carboxy methylcellulose), silicone rubber, and butadiene rubber.

A method of manufacturing an electrode of a secondary battery according to an exemplary embodiment of the present invention comprises preparing a raw material, preparing a base film with a plurality of through holes, fixing the raw material inside the holes of the base film, and attaching the base film with the raw material fixed inside the holes to a current collector.

For example, preparing a raw material may comprise mixing an active material powder and a binder powder to form a mixture, extruding the mixture, and pulverizing the extruded mixture.

For example, preparing a raw material may comprise mixing active material powder and binder powder at high temperature to form lumped mixture, and pulverizing the lumped mixture at room temperature.

For example, mixing active material powder and binder powder at high temperature may be performed at a temperature range of about 100°C to about 200°C.

For example, the active material powder may comprise at least one of carbon, silicon, tin, antimony, and graphene.

For example, the active material powder may comprise at least one of aluminum (Al), nickel (Ni), titanium (Ti), tungsten (W), iron (Fe), and chromium (Cr).

For example, the binder powder may comprise at least one of PVDF (Polyvinylidene fluoride), elastomer, SBR (styrene butadiene rubber), CMC (carboxy methylcellulose), NBR (nitrile butadiene rubber), butadiene, and PAA (polyacrylic acid).

For example, in mixing the active material powder and the binder powder or mixing the active material powder and the binder powder at a high temperature, conductive powder may further be mixed.

For example, the conductive powder may comprise at least one of carbon black, acetylene black, VGCF (Vapor grown carbon fiber), CNT, and graphene.

For example, the base film with a plurality of through holes may include at least one of PVDF (Polyvinylidene fluoride), PTFE (Polytetrafluoroethylene), PP (polypropylene), PE (polyethylene), PVC (Polyvinyl chloride), nylon, and cotton.

For example, the base film with a plurality of through holes may comprise either PVDF or PTFE, and the base film with a plurality of through holes may be immersed in a sodium naphthalene solution or a sodium naphthalene solution may be sprayed onto a surface of the base film with a plurality of through holes.

For example, fixing the raw material inside the holes of the base film may comprise applying a raw material on top of a lower release film, arranging a base film with a plurality of through holes on top of the applied raw material, applying a raw material on top of the base film with a plurality of through holes, arranging an upper release film on top of the raw material, and thermally compressing the upper part of the upper release film.

For example, fixing the raw material inside the holes of the base film may comprise inserting a base film with a plurality of through holes into a roll-to-roll press, and injecting a raw material between the rolls.

For example, attaching the base film with the raw material fixed inside the holes to a current collector may be performed by an adhesive.

For example, the adhesive may be a mixture of a polymer resin and a conductor or a conductive polymer resin.

For example, the polymer resin may include any one of SBR (styrene butadiene rubber), CMC (carboxy methylcellulose), silicone rubber, and butadiene rubber.

In this way, according to the electrode material for a secondary battery and the manufacturing method thereof according to the present invention, a film-type base film with a plurality of through holes acts as a binder instead of a conventional dry powder-type binder. That is, the base film with a plurality of through holes plays a role in binding expansion and contraction of lithium during charging and discharging. Therefore, the manufacturing process is simplified, and cracks caused by external impact can be reduced.

### BRIEF DESCRIPTION OF THE DRAWINGS

FIG. 1 is a schematic cross-sectional view of an electrode material for a secondary battery according to an exemplary embodiment of the present invention.
FIG. 2 is an actual photograph of a base film with a plurality of through holes of the electrode material for a secondary battery illustrated in FIG. 1.
FIG. 3 is a flowchart illustrating a method for manufacturing the electrode material for a secondary battery illustrated in FIG. 1.
FIG. 4 is a flowchart illustrating an embodiment of step S110 illustrated in FIG. 3.
FIG. 5 is a conceptual diagram illustrating step S112 illustrated in FIG. 4.
FIG. 6 is a flowchart illustrating an embodiment of step S110 illustrated in FIG. 3.
FIG. 7 is a flowchart illustrating an embodiment of step S130 illustrated in FIG. 3.
FIG. 8 is a schematic cross-sectional view after step S131 illustrated in FIG. 7.
FIG. 9 is a schematic cross-sectional view after step S132 illustrated in FIG. 7.
FIG. 10 is a schematic cross-sectional view after step S13 3 illustrated in FIG. 7.
FIG. 11 is a schematic cross-sectional view illustrating S135 after step S134 illustrated in FIG. 7.
FIG. 12 is a flowchart illustrating another embodiment of step S130 illustrated in FIG. 3.
FIG. 13 is a schematic cross-sectional view illustrating step S232 illustrated in FIG. 12.

### DETAILED DESCRIPTION OF THE ILLUSTRATED EMBODIMENTS

The present invention is described more fully hereinafter with reference to the accompanying drawings, in which example embodiments of the present invention are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that, although the terms first, second, etc. may be used herein to describe various elements, these elements should not be limited by these terms. These terms are only used to distinguish one element from another element. For example, a first element discussed below could be termed a second element, and similarly, a second element may also be termed a first element, without departing from the teachings of the present invention.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, components, and/or groups thereof but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention relates to a functional sheet manufactured through a powder spray method capable of enhancing safety and function due to not using an organic solvent which is harmful to the human body, and a method for manufacturing the functional sheet.

Hereinafter, embodiments of the present invention will be described in more detail with reference to the drawings.

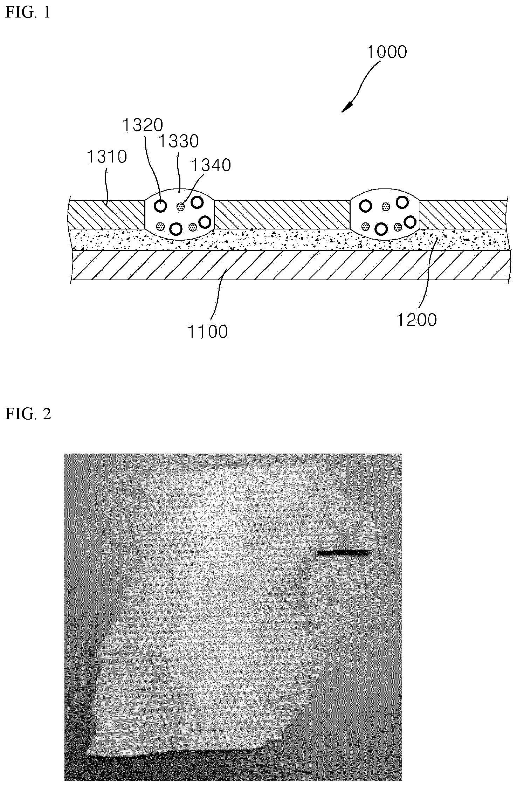

FIG. 1 is a schematic cross-sectional view of an electrode material for a secondary battery according to an exemplary embodiment of the present invention, and FIG. 2 is an actual photograph of a base film with a plurality of through holes of the electrode material for a secondary battery illustrated in FIG. 1.

Referring to FIGS. 1 and 2, an electrode material for a secondary battery according to an exemplary embodiment of the present invention comprises a base film 1310, a binder 1330 and a current collector 1100.

The base film 1310 may be, for example, a mesh film or a membrane film. The base film 1310 includes a plurality of through holes. The binder 1330 is fixed to the through holes, and active material particles 1320 are dispersed inside the binder 1330.

As an example, a thickness ratio of the binder 1330 and the base film 1310 with a plurality of through holes may be in a range of 1:1 to 2:1. If the thickness of the binder 1330 is too small, the efficiency may decrease, and if the thickness of the binder 1330 is too large, the bonding strength with the base film 1310 with a plurality of through holes may decrease.

As an example, the base film 1310 with a plurality of through holes may include at least one of PVDF (Polyvinylidene fluoride), PTFE (Polytetrafluoroethylene), PP (polypropylene), PE (polyethylene), PVC (Polyvinyl chloride), nylon, and cotton.

As an example, the base film 1310 with a plurality of through holes may include either PVDF or PTFE, and the base film 1310 with a plurality of through holes may be treated with a sodium naphthalene solution. In this way, when a sodium solution is sprayed in a liquid phase, the surface of a fluoropolymer including a non-adhesive material such as PTFE, PFA, FEP, ETFE, PCTFE, and PVDF may be modified to increase the heterogeneous bonding strength. As an example, the diameter of the through holes of the base film 1310 may be in the range of about 50 µm to about 800 µm. If the size of the through holes is too small, it is difficult for the active material particles 1320, binder 1330, conductive material particles 1340, etc. to penetrate into the through holes during the manufacturing process, and if the size of the through holes is too large, the binding force of the active material particles 1320 becomes weak. More preferably, the diameter of the through holes may be in the range of about 100 µm to about 600 µm.

The current collector 1100 is attached to the base film 1310 with a plurality of through holes.

As an example, the active material particles 1320 may be negative electrode active material particles including at least one of carbon, silicon, tin, antimony, and graphene.

At this time, the current collector 1100 may be copper (Cu) foil.

As an example, the active material particles 1320 may be positive electrode active material particles made of aluminum (Al), nickel (Ni), titanium (Ti), tungsten (W), iron (Fe), chromium (Cr), alloys thereof, and combinations thereof.

At this time, the current collector 1100 may be aluminum foil (Al).

As an example, the binder 1330 may include at least one of PVDF (Polyvinylidene fluoride), elastomer, SBR (styrene butadiene rubber), CMC (carboxy methylcellulose), NBR (nitrile butadiene rubber), butadiene, and PAA (polyacrylic acid).

Meanwhile, the binder 1330 may further include conductive material particles 1340 dispersed within the binder 1330. As an example, the conductive material particles 1340 may include at least one of carbon black, acetylene black, VGCF (Vapor grown carbon fiber), CNT, and graphene.

As an example, the base film 1310 with a plurality of through holes and the current collector 1100 may be attached by an adhesive 1200.

As an example, the adhesive 1200 may be a mixture of a polymer resin and a conductor or a conductive polymer resin.

As an example, the polymer resin may include any one of SBR (styrene butadiene rubber), CMC (carboxy methylcellulose), silicone rubber, and butadiene rubber.

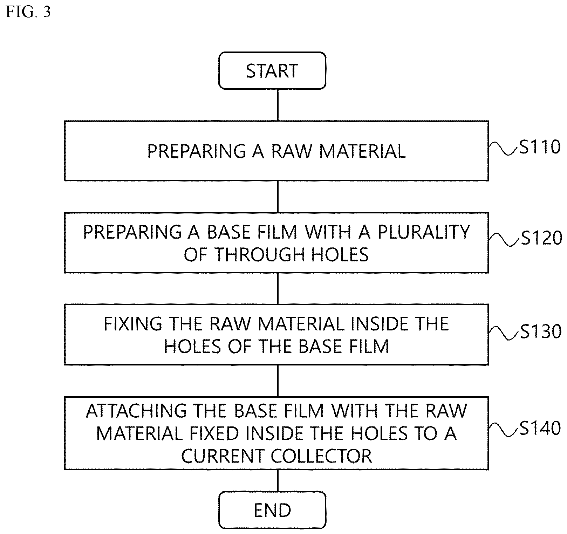

FIG. 3 is a flowchart illustrating a method for manufacturing the electrode material for a secondary battery illustrated in FIG. 1.

Referring to FIG. 3, according to an exemplary embodiment of the present invention, a method for manufacturing an electrode material for a secondary battery comprises preparing a raw material (step S110), and preparing a base film including a plurality of through holes (step S120). The preparation of the raw material and the base film with a plurality of through holes is not related to the order.

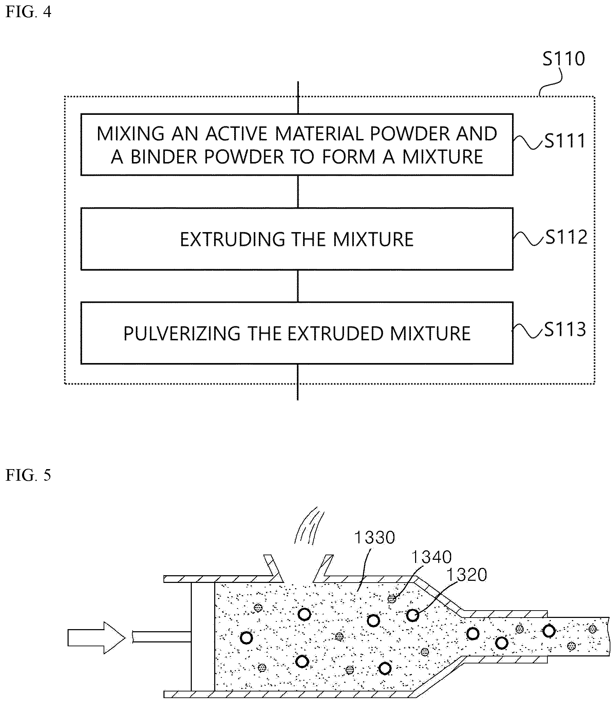

FIG. 4 is a flowchart illustrating an embodiment of step S110 illustrated in FIG. 3.

Referring to FIGS. 3 and 4, the step of preparing the raw material (step S110) may include a step of mixing active material powder and binder powder (step S111), a step of extruding the mixture (step S 1 12), and a step of pulverizing the extrudate (step S113).

As described above, for manufacturing a negative electrode material, the active material powder may include at least one of carbon, silicon, tin, antimony, and graphene.

In contrast, for the manufacture of the positive electrode material, the active material powder may include at least one of aluminum (Al), nickel (Ni), titanium (Ti), tungsten (W), iron (Fe), and chromium (Cr).

At this time, the binder powder may include at least one of PVDF (Polyvinylidene fluoride), elastomer, SBR (styrene butadiene rubber), CMC (carboxy methylcellulose), NBR (nitrile butadiene rubber), butadiene, and PAA (polyacrylic acid).

Meanwhile, in the step of mixing the active material powder and the binder powder (step 5111), a conductive powder may further be mixed.

At this time, the conductive powder may include at least one of carbon black, acetylene black, VGCF (Vapor grown carbon fiber), CNT, and graphene.

Thereafter, a process of extruding the mixture (step S112) is performed as shown in FIG. 5.

FIG. 5 is a conceptual diagram illustrating step S112 illustrated in FIG. 4.

Referring to FIG. 5, a mixture is injected into an inlet of a high-temperature cylinder, and by driving a piston on one side, an active material 1320 and a conductive material 1340 bound by a molten binder 1330 are discharged from an outlet on the other side to be solidified.

Referring again to FIG. 4, the solidified discharge is then pulverized (step S113). Then, the solidified and pulverized discharge is injected into the through holes of the base film. When the solidified discharge is pulverized to be formed into powder and then injected into the through holes of the base film, the active material and conductive material are pre-combined with the binder to some extent, so that the binding force in the through holes can be strengthened in comparison with the case in which active material powder, conductive material powder, and binder powder are mixed and injected into the through holes.

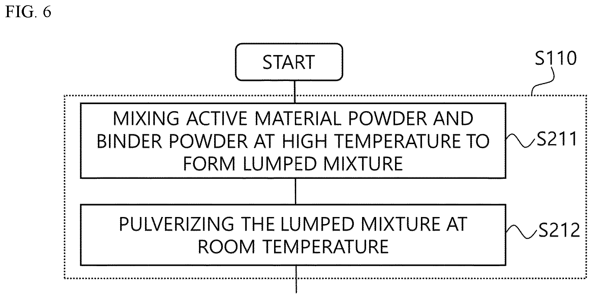

FIG. 6 is a flowchart illustrating an embodiment of step S 110 illustrated in FIG. 3.

Referring to FIG. 6, the step of preparing the raw material (step S110) may include the step of mixing the active material powder and the binder powder at high temperature (S211) and the step of pulverizing the lumped mixture at room temperature (S212). As an example, the step of mixing the active material powder and the binder powder at high temperature may be performed at a temperature range of about 100°C to about 200°C.

In the embodiment of FIG. 6, as in the embodiment of FIG. 4, a conductive material may further be mixed, and since the materials of the active material, the binder, and the conductive material are the same as in the embodiment of FIG. 4, a same description will be omitted.

Referring again to FIG. 3, after the raw material and the base film with a plurality of through holes are prepared, the raw material is fixed inside the through holes of the base film (step S130).

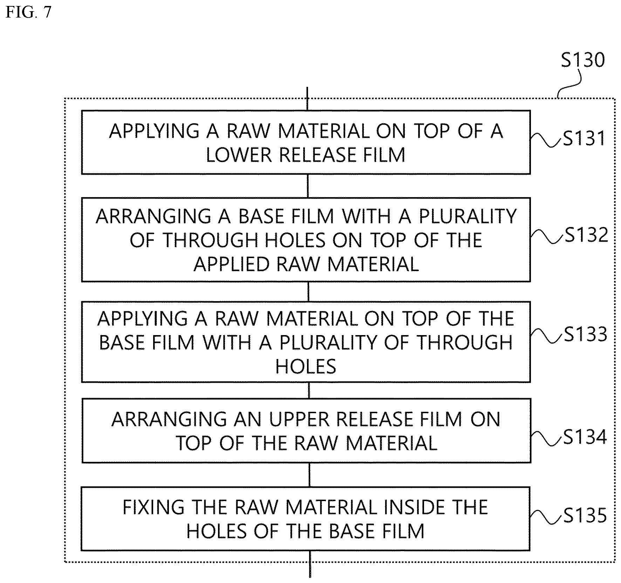

FIG. 7 is a flowchart illustrating an embodiment of step S130 illustrated in FIG. 3.

Referring to FIG. 7, in order to perform the step (step S130) of fixing the raw material inside the through holes of the base film, first, the raw material is applied to an upper surface of a lower release film (step S131).

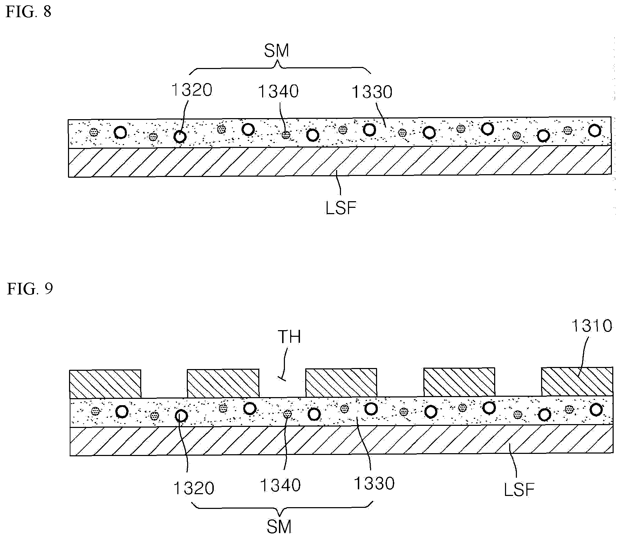

FIG. 8 is a schematic cross-sectional view after step S131 illustrated in FIG. 7.

Referring to FIG. 8, the previously prepared raw material (SM) is applied to an upper surface a lower release film (LSF). At this time, the raw material (SM) may be, as described above, the raw material (SM) that has undergone the process described in FIG. 4, but may also be a mixture of active material 1320 powder, binder 1330 powder, and conductive powder 1340 without this process.

Meanwhile, although not illustrated, the mixture may be applied more firmly by static electricity induced by friction, and by applying an opposite polarity potential to the lower support of the lower release film (LSF). Referring back to FIG. 7, a base film with a plurality of through holes is then placed on top of the applied raw material (step S132).

FIG. 9 is a schematic cross-sectional view after step S132 illustrated in FIG. 7.

Referring back to FIG. 9, a base film 1310 with a plurality of through holes having a plurality of through holes is placed on top of the raw material (SM).

Referring back to FIG. 7, a raw material is then applied on top of the base film with a plurality of through holes (step S133).

At this time, as described above, static electricity induced by friction may be applied to the mixture (SM) and a potential of opposite polarity may be applied to the lower support of the lower release film (LSF) to enforce disposition of the mixture (SM).

Referring back to FIG. 7, an upper release film is then placed on top of the raw material (step S134), and the upper part of the upper release film is thermally pressed (step S135).

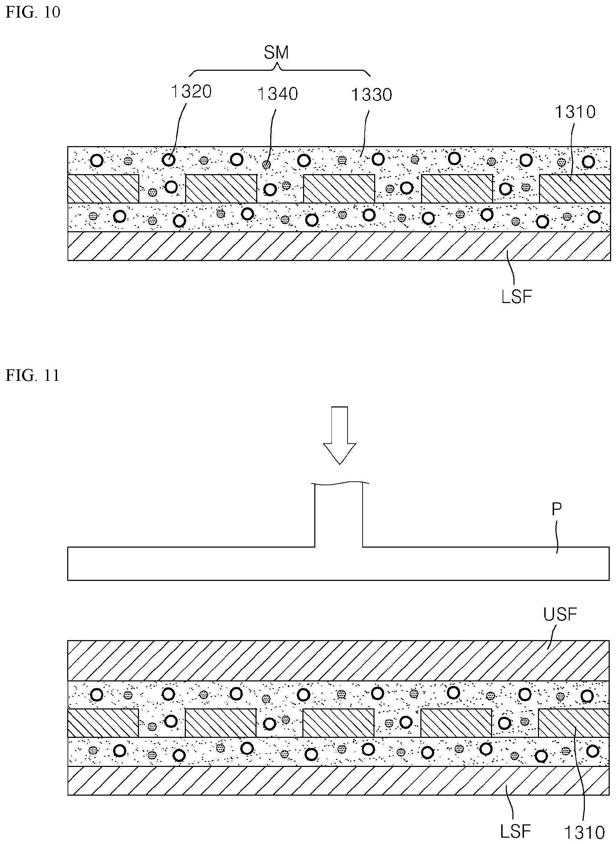

FIG. 11 is a schematic cross-sectional view illustrating S135 after step S134 illustrated in FIG. 7.

Referring to FIG. 11, a binder is melted by applying pressure through a high temperature and high pressure press (P) to the upper release film (USF) to fix the active material and the conductive material within the through holes of the base film 1310.

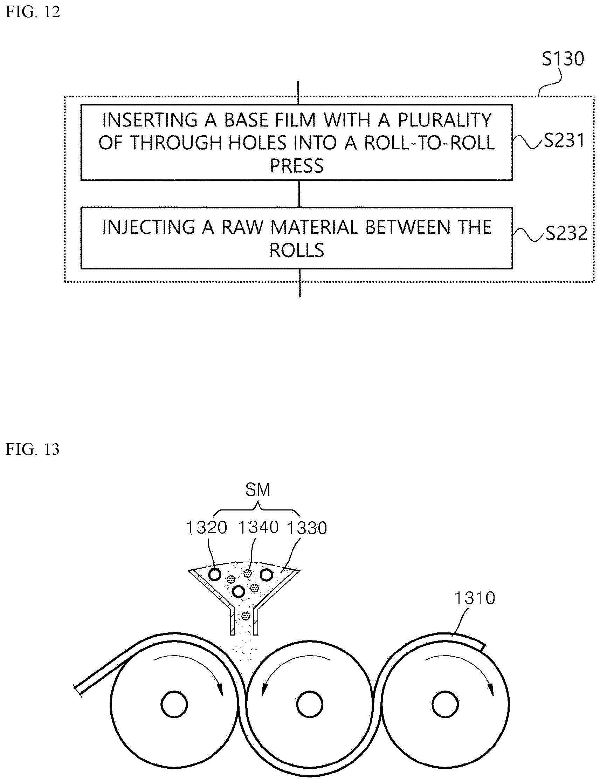

FIG. 12 is a flowchart illustrating another embodiment of step S130 illustrated in FIG. 3.

Referring to FIG. 12, the step 130 of fixing the raw material inside the through holes of the base film may include inserting the base film with a plurality of through holes into a roll-to-roll press (step 231) and inserting the raw material between the rolls (step 232).

FIG. 13 is a schematic cross-sectional view illustrating step S232 illustrated in FIG. 12.

Referring to FIG. 13, the base film 1310 with a plurality of through holes is first inserted into a rotating roll-to-roll press, and the raw material (SM) is inserted between the rolls.

Referring again to FIG. 3, the base film with a plurality of through holes on which the raw material is fixed is attached to a current collector (step S140).

As described in FIG. 1, at this time, the base film 1310 with a plurality of through holes and the current collector 1100 may be attached by an adhesive 1200. In contrast, the base film 1310 with a plurality of through holes may be directly attached to the current collector 1100 by applying heat to it.

In this way, according to the electrode material for a secondary battery and the manufacturing method thereof according to the present invention, a film-type base film with a plurality of through holes acts as a binder instead of a conventional dry powder type binder. That is, the base film with a plurality of through holes plays a role of binding particles even through the expansion and contraction of lithium during charging and discharging. Therefore, cracks caused by external impact can be reduced and the manufacturing process may be simplified.

It will be apparent to those skilled in the art that various modifications and variation may be made in the present invention without departing from the spirit or scope of the invention. Thus, it is intended that the present invention cover the modifications and variations of this invention provided they come within the scope of the appended claims and their equivalents.

## Claims

1. An electrode material for a secondary battery comprising:
a base film with a plurality of through holes;
a binder including active material particles dispersed therein and fixed to the through holes; and
a current collector attached to the base film.

2. The electrode material of claim 1, wherein the active material particles are negative electrode active material particles including at least one of carbon, silicon, tin, antimony, and graphene, and
the current collector is copper (Cu) foil.

3. The electrode material of claim 1, wherein the active material particles are positive electrode active material particles composed of aluminum (Al), nickel (Ni), titanium (Ti), tungsten (W), iron (Fe), chromium (Cr), alloys thereof, and combinations thereof, and
the current collector is aluminum (Al) foil.

4. The electrode material of claim 1, wherein the base film with a plurality of through holes comprises at least one of PVDF (Polyvinylidene fluoride), PTFE (Polytetrafluoroethylene), PP (polypropylene), PE (polyethylene), PVC (Polyvinyl chloride), nylon, and cotton.

5. The electrode material of claim 1, wherein the base film with a plurality of through holes comprises either PVDF (Polyvinylidene fluoride) or PTFE (Polytetrafluoroethylene), and the base film with a plurality of through holes is treated with a sodium naphthalene solution.

6. The electrode material of claim 1, wherein a thickness ratio of the binder and the base film with a plurality of through holes is in the range of 1: 1 to 2:1.

7. The electrode material of claim 1, wherein the binder further includes conductive particles dispersed therein and the conductive particles comprise include at least one of carbon black, acetylene black, VGCF (Vapor grown carbon fiber), CNT, and graphene.

8. A method of manufacturing an electrode of a secondary battery, the method comprising:
preparing a raw material;
preparing a base film with a plurality of through holes;
fixing the raw material inside the holes of the base film; and
attaching the base film with the raw material fixed inside the holes to a current collector.

9. The method of claim 8, wherein preparing a raw material comprises:
mixing an active material powder and a binder powder to form a mixture;
extruding the mixture; and
pulverizing the extruded mixture.

10. The method of claim 8, wherein preparing a raw material comprises:
mixing active material powder and binder powder at high temperature to form lumped mixture; and
pulverizing the lumped mixture at room temperature.

11. The method of claim 8, wherein the base film with a plurality of through holes comprises either PVDF or PTFE, and
the base film with a plurality of through holes is immersed in a sodium naphthalene solution or a sodium naphthalene solution is sprayed onto a surface of the base film with a plurality of through holes.

12. The method of claim 8, wherein fixing the raw material inside the holes of the base film comprises:
applying a raw material on top of a lower release film;
arranging a base film with a plurality of through holes on top of the applied raw material;
applying a raw material on top of the base film with a plurality of through holes;
arranging an upper release film on top of the raw material; and
thermally compressing the upper part of the upper release film.

13. The method of claim 8, wherein fixing the raw material inside the holes of the base film comprises:
inserting a base film with a plurality of through holes into a roll-to-roll press; and
injecting a raw material between the rolls.

14. The method of claim 8, wherein attaching the base film with the raw material fixed inside the holes to a current collector is performed by an adhesive.

15. The method of claim 14, wherein the adhesive is a mixture of a polymer resin and a conductor or a conductive polymer resin.
